# EUROPEAN PATENT APPLICATION

(11) **EP 0 654 753 A2**
(43) Date of publication of application: **24.05.1995**
(21) Application number: 94308665.2
(22) Date of filing: 23.11.1994
(51) Int. Cl.: G06K 9/20

(54) **A method of analyzing an image showing a graphical representation**

(30) Priority: 24.11.1993 US 158062
(71) Applicant: XEROX CORPORATION, Rochester New York 14644 (US)
(72) Inventor: Mahoney, James V., San Francisco, CA 94133 (US); Rao, Satyajit, Cambridge, MA 02139 (US)
(74) Representative: Johnson, Reginald George

(57) **Abstract**

Input image data define an input image (10) that shows a parallel length graph, such as a bar graph, a histogram, a Gantt chart, a timing diagram, or a time line. The input image data are used to obtain parallel feature data indicating features (20) in the input image that satisfy a constraint on parallel features. The parallel feature data (20) are used to obtain length data (30) indicating each feature's length. For example, the parallel feature constraint could include a direction criterion, a terminations criterion, and a position criterion. Or the parallel feature constraint could include a feature candidate criterion for a specific category of parallel length graphs, an elongation criterion, a direction criterion, and a base alignment criterion. The direction criterion can require features that extend approximately parallel to a prominent distance within the parallel length graph, such as a mode of orientation or a mode of angle of least inertia. The input image (10) can show a sketch and the length data (30) can be used to obtain output image data defining an output image that includes a precisely formed parallel length graph representing the indicated lengths. Or the length data (30) can be used to obtain another graphical representation of the lengths. Or the length data (30) could be used to provide control signals to a system.

## Description

The present invention relates to techniques for analyzing an image showing a graphical representation, and more particularly to analyzing an image showing a parallel length graph.

The Ricoh Imagio MF530 Series General Catalog, Ricoh K.K., 1992, describes Al copying functions at pages 23 and 24. Page 23 shows how different types of graphs can be created by writing numerals by hand on a form. The types are designated as band graph, comparative bar graph, pie graph, stacked bar graph, stacked bar graph with shadows, bent line graph, heavy bent line graph, and three-dimensional pie graph.

According to the present invention there is provided a method, machine and article of manufacture according to the appended claims.

The invention is based on the discovery of a technique for analyzing an image showing a parallel length graph such as a vertical or horizontal bar graph or histogram, a Gantt chart, a timing diagram, a time line, or another graphical representation in which a number of features that are approximately parallel have lengths proportional to values they represent. The technique analyzes the image to obtain information about each length represented in the graph. The image can be a human-produced image showing a sketch of a parallel length graph.

The technique can, for example, receive image data defining an image showing a parallel length graph. The technique can use the image data to obtain parallel feature data indicating features of the image that satisfy a constraint on parallel features. The technique can then use the parallel feature data to obtain length data indicating, for each of the features, a length. The length data can, for example, indicate distance between ends of a feature that satisfies the constraint on parallel features.

The constraint on parallel features can include a direction criterion, a terminations criterion, and a position criterion. The direction criterion can require features that extend approximately parallel to a prominent direction within the parallel length graph, such as a mode of orientation. The terminations criterion can require features that have two terminations. The position criterion can require features that have approximate length greater than distance from an axis.

The constraint on parallel features can instead include a feature candidate criterion for a specific category of parallel length graphs, an elongation criterion, a direction criterion, and a base alignment criterion. The feature candidate criterion can relate, for example, to center of area along an axis or to grouping of parts based on position. The elongation criterion can require elongated features, such as features that are elongated in the direction of their angles of least inertia. The direction criterion can require features that extend approximately parallel to a prominent direction within the parallel length graph, such as a mode of angle of least inertia. The base alignment criterion can require a set of features that have aligned bases.

The technique can store the length data or use it somehow. For example, the technique can use the length data to provide control signals to a system. Or the input image can show a sketch of a parallel length graph and the technique can use the length data to obtain data defining an image of a precisely formed parallel length graph similar to the sketch. Or the technique can use the length data to obtain data defining an image of another graphical representation of the lengths indicated by the length data.

The technique can be implemented with a machine that includes image input circuitry and data indicating image processing instructions. The image input circuitry can receive data defining an input image that shows a parallel length graph. The machine's processor can execute the image processing instructions. In executing the image processing instructions, the processor can receive the input image data from the image input circuitry and use the input image data to obtain parallel feature data indicating features in the input image that satisfy a constraint on parallel features. The processor can then use the parallel feature data to obtain length data indicating the length of each feature. The machine can be a high-speed image processing server that responds to image processing requests from a network to which it is connected.

The machine can also include image output circuitry, and the processor can use the length data to obtain output image data defining an output image that shows a parallel length graph similar to the analyzed parallel length graph or that shows another graphical representation of the lengths. The machine can be a fax server or a copier.

The technique can also be implemented in a software product that includes a storage medium and data stored by the storage medium. The software product can be used in a machine that includes image input circuitry. The data stored by the storage medium can include image processing instructions the machine's processor can execute. In executing the image processing instructions, the processor can receive input image data from the image input circuitry defining an input image that shows a parallel length graph and use the input image data to obtain parallel feature data indicating features in the input image that satisfy a constraint on parallel features. The processor can then use the parallel feature data to obtain length data indicating the length of each feature.

The technique described above is advantageous because it makes it possible to automatically analyze a wide variety of types of parallel length graphs. The length data obtained by the technique can be used to produce a precisely drawn image of a parallel length graph in response to a simple sketch by a user.

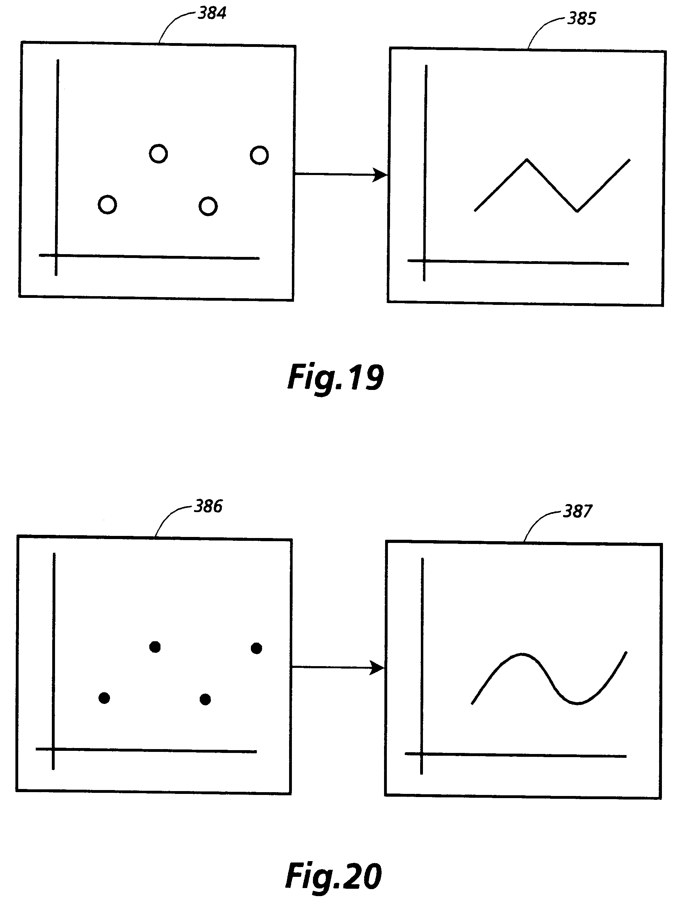

The present invention will be described further, by way of examples, with reference to the accompanying drawings, in which:-
Fig. 1 is a schematic diagram illustrating how an image showing a parallel length graph can be analyzed;
Fig. 2 is a flow chart showing general acts in analyzing an image showing a parallel length graph;
Fig. 3 is a schematic block diagram showing general components of a software product and a machine in which the software product can be used to implement the general acts in Fig. 2;
Fig. 4 is a schematic block diagram showing sketches of parallel length graphs and ways in which a user can provide data defining an image showing a parallel length graph made by hand;
Fig. 5 is a schematic block diagram showing how a user can provide data defining an image showing a parallel length graph produced interactively with a machine;
Fig. 6 is a schematic block diagram of a machine that can analyze an image showing a parallel length graph;
Fig. 7 is a flow chart of acts performed by the machine of Fig. 6 in a first implementation;
Fig. 8 is a flow chart of acts performed by the machine of Fig. 6 in a second implementation;
Fig. 9 is a flow chart showing how criteria can be applied in Fig. 8;
Each of Figs. 10-18 shows an example of a sketch of a parallel length graph and a precisely formed parallel length graph obtained using techniques shown in Figs. 6, 8, and 9;
Each of Figs. 19 and 20 shows schematically a sketch of an X-Y graph with marked reference points and a precisely formed line graph;

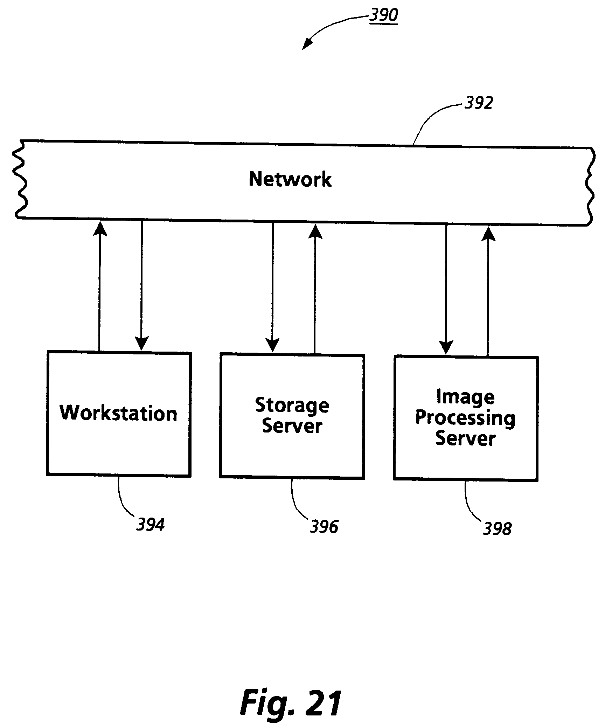

Fig. 21 is a schematic block diagram of an implementation with an image processing server;

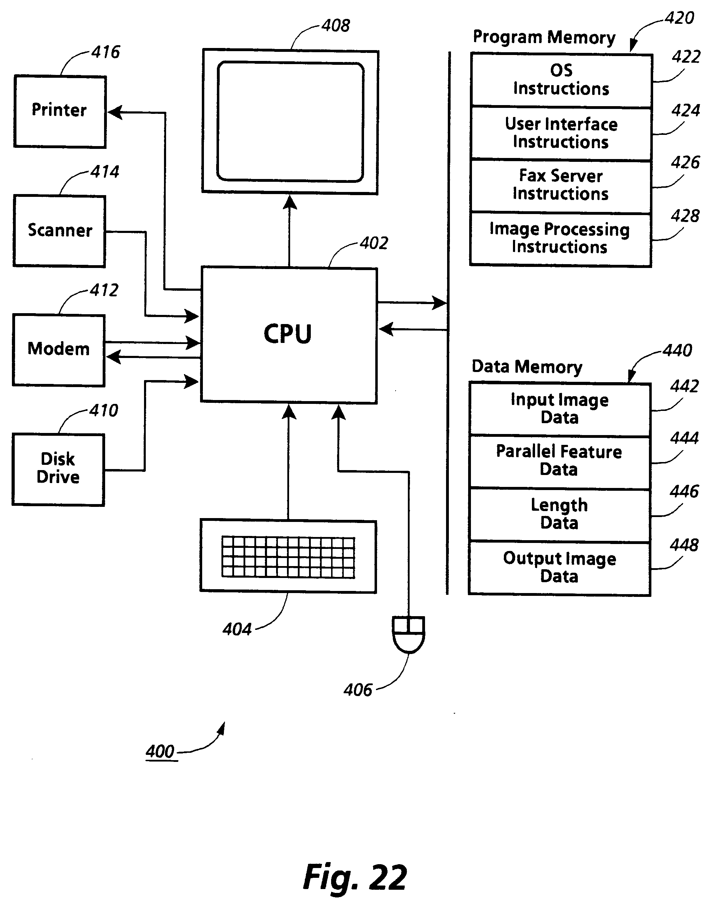

Fig. 22 is a schematic block diagram of a fax server application; and

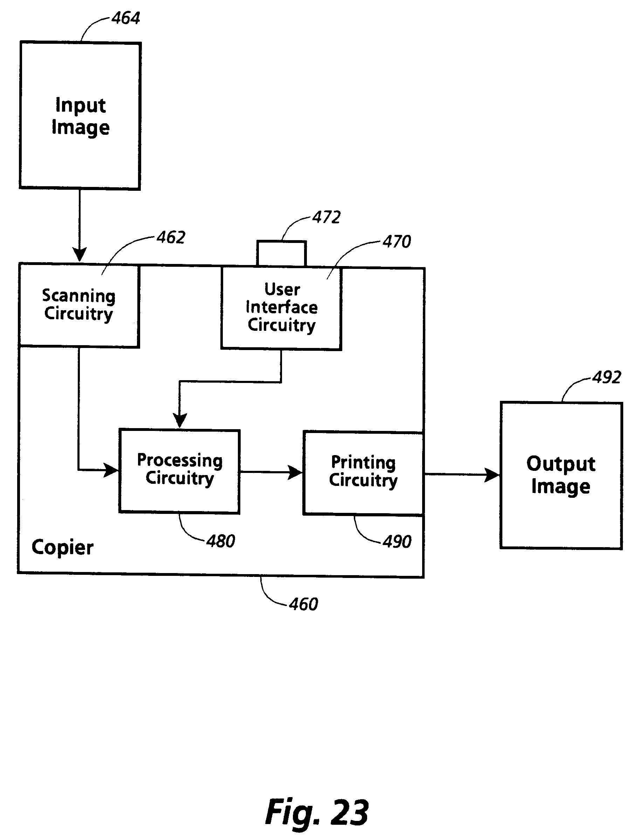

Fig. 23 is a schematic block diagram of a copier application.

A "parallel length graph" is a graphical representation in which a number of features that are approximately parallel have lengths proportional to values they represent. The following categories of graphical representations are examples of parallel length graphs: bar graphs, histograms, Gantt charts, timing diagrams, and time lines.

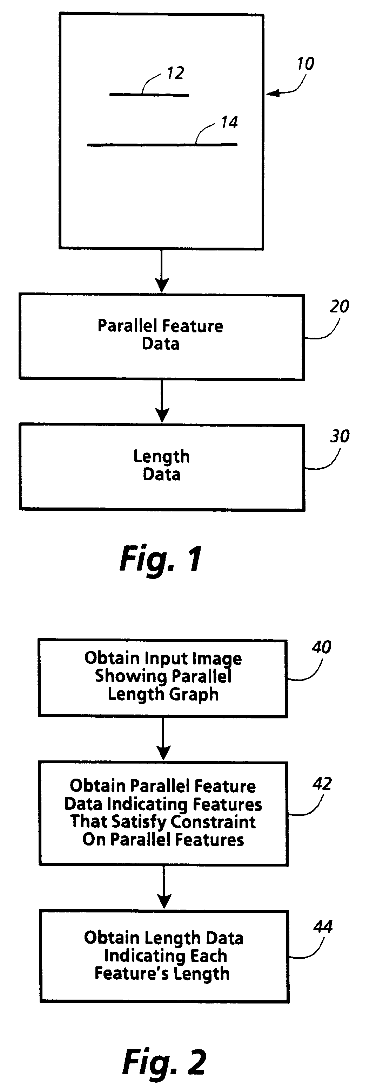

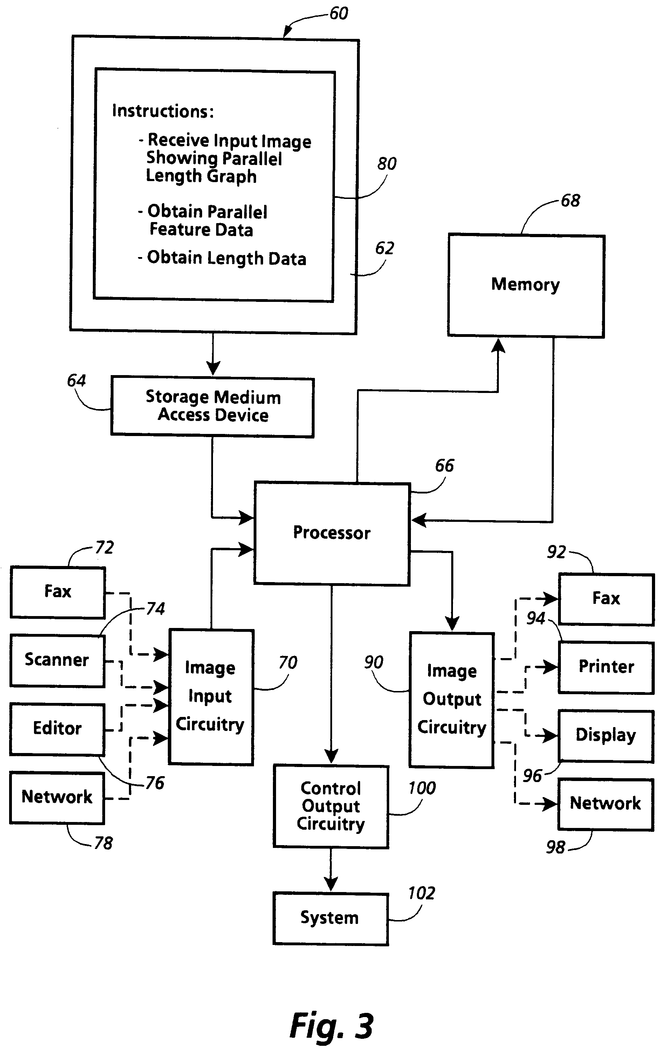

Fig. 1 shows schematically how an image showing a parallel length graph can be analyzed. Fig. 2 shows general acts in analyzing an image showing a parallel length graph. Fig. 3 shows general components of a software product and of a machine in which it can be used.

In Fig. 1, image 10 shows a parallel length graph. Image 10 can, for example, be a human-produced sketch. The parallel length graph includes features 12 and 14, illustratively extending approximately parallel to each other in a horizontal direction. A machine receiving data defining image 10 can respond by automatically obtaining parallel feature data 20 indicating features in image 10 that satisfy a constraint on parallel features; in the illustrated example, parallel feature data 20 could indicate features 12 and 14. Then the machine can automatically use parallel feature data 20 to obtain length data 22 indicating a length for each feature indicated by parallel feature data 20; in the illustrated example, length data 22 could indicate that feature 12 has a length of about four units and feature 14 has a length of about seven units.

The general acts in Fig. 2 begin in box 40 by obtaining input image data defining an input image that shows a parallel length graph. In response, the act in box 42 uses the input image data to obtain parallel feature data indicating features in the input image that satisfy a constraint on parallel features. The act in box 44 then uses the parallel feature data to obtain length data indicating each feature's length.

Fig. 3 shows software product 60, an article of manufacture that can be used in a system that includes components like those shown in Fig. 3. Software product 60 includes data storage medium 62 that can be accessed by storage medium access device 64. Data storage medium 62 could, for example, be a magnetic medium such as a set of one or more tapes, diskettes, or floppy disks; an optical medium such as a set of one or more CD-ROMs; or any other appropriate medium for storing data.

Data storage medium 62 stores data that storage medium access device 64 can provide to processor 66. Processor 66 is connected for accessing memory 68, which can include program memory storing data indicating instructions that processor 66 can execute and also data memory storing data that processor 66 can access in executing the instructions.

Processor 66 is also connected for receiving data defining images from image input circuitry 70. The data could be obtained from facsimile (fax) machine 72; from scanner 74; from editor 76, which could be a forms editor or other interactive image editor controlled by user input devices such as a keyboard and mouse or a pen- or stylus-based input device; or from network 78, which could be a local area network or other network capable of transmitting data defining an image.

In addition to data storage medium 62, software product 60 includes data stored by storage medium 62. The stored data include data indicating image processing instructions 80, which processor 66 can execute to perform acts like those in Fig. 2. In executing instructions 80, processor 66 receives input image data defining an input image from image input circuitry 70. The input image set shows a parallel length graph. Processor 66 uses the input image data to obtain parallel feature data indicating features in the input image that satisfy a constraint on parallel features. Processor 66 then uses the parallel feature data to obtain length data indicating each feature's length.

Processor 66 can also be connected for providing data defining images to image output circuitry 90. For example, software product 60 could include data indicating instructions processor 66 can execute to use the length data to obtain output image data defining an output image. The output image could show a more precisely formed version of the parallel length graph, for example, or could show another graphical representation of the lengths indicated by the length data. The output image data could be provided to image output circuitry 90, and could in turn be provided to fax machine 92, to printer 94, to display 96, or to network 98.

The length data could also be used to provide control signals. For example, memory 68 could store control instructions processor 66 can execute to use the length data to obtain control data defining control signals. The control data could be provided to control output circuitry 100, which could respond by providing control signals to system 102.

Rather than being used immediately, the length data could instead be stored in memory 68 for possible future use. This would be appropriate, for example, where information indicating an operation to be performed on an input image has not been obtained at the time data defining the input image is received.

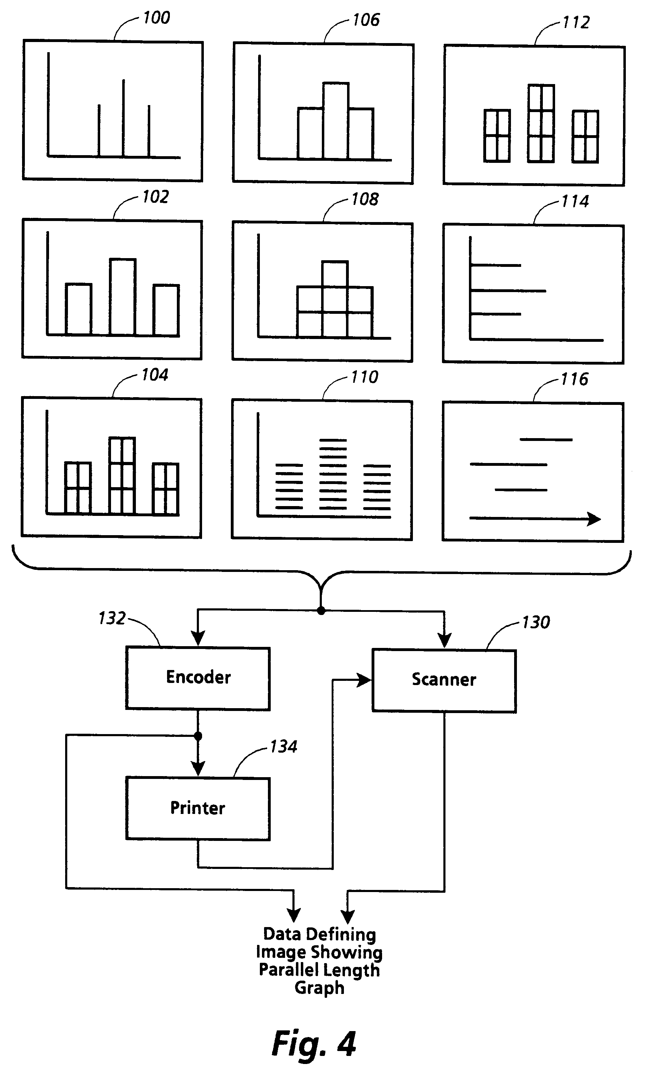

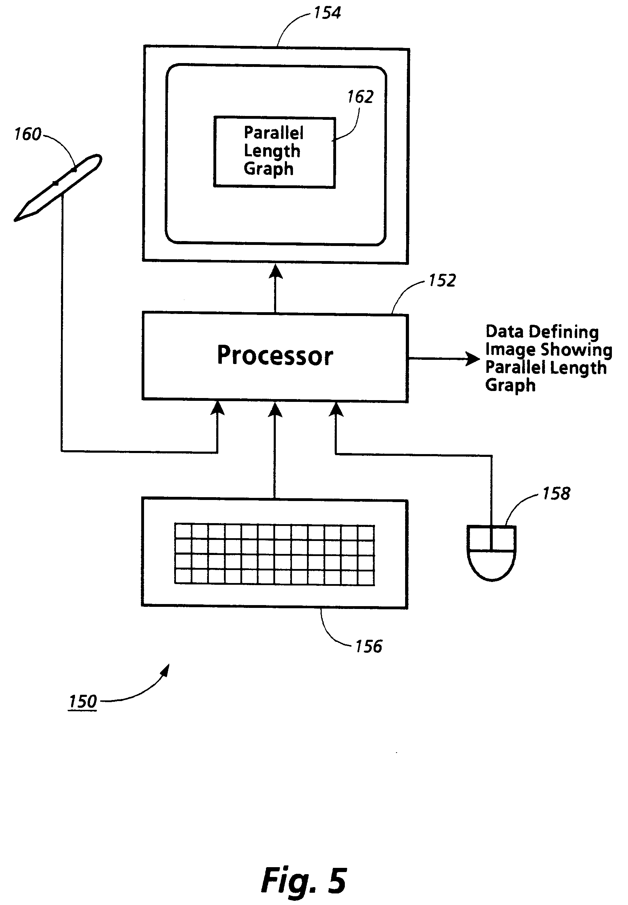

Fig. 4 illustrates ways in which a user can provide an image showing a hand sketch of a parallel length graph. Fig. 5 illustrates ways in which a user can provide an image showing a parallel length graph by interacting with a machine.

Fig. 4 shows at the top several examples of images showing parallel length graphs. Image 100 shows a graph with axes and vertical lines of different lengths on the *x* axis; image 102 a bar graph with axes and vertical bars of different lengths on the *x* axis; image 104 a graph with axes and composite features of different heights on the *x* axis; image 106 a bar graph or histogram with contiguous vertical bars of different lengths on the *x* axis; image 108 a bar graph or histogram with contiguous segmented vertical bars of different lengths on the *x* axis; image 110 a graph with axes and stacks of short horizontal lines extending to different heights above the x axis; image 112 a graph with composite features of different heights; image 114 a graph with axes and horizontal lines of different lengths extending from the *y* axis; and image 116 a Gantt chart, timing diagram, or time line with horizontal lines of different lengths and without aligned bases. The examples in Fig. 4 do not exhaust the variety of parallel length graphs, but are merely suggestive; for example, the widths of bars in images 102, 104, 106, 108, and 112 could be varied to convey additional information.

In general, the images in Fig. 4 can be obtained in any appropriate way. For example, the parallel length graphs can be sketches produced by marking actions performed on a marking medium by hand.

If the marking medium is a sheet, scanner 130 can receive the sheet. Scanner 130 operates on the sheet to provide data defining an image showing a parallel length graph.

If the marking medium is a marking surface of an electronic device that can sense marks, encoder 132 can receive signals from the electronic device and use the signals to obtain data defining an image showing a parallel length graph. This data can then be provided to printer 134 to obtain a sheet on which marks are printed, and this sheet can be provided to scanner 130. Scanner 130 provides data defining an image showing a parallel length graph.

Fig. 4 also shows that data from encoder 132 could be used directly as data defining an image showing a parallel length graph. This would be appropriate if encoder 132 could provide data defining an image in response to marking actions.

Fig. 5 shows machine 150, which could be a personal computer, a workstation, or another data processing system. Machine 150 includes processor 152; display 154; keyboard 156; pointing device 158, illustratively a mouse; and screen position indicating device 160, illustratively a stylus. A user can operate keyboard 156 and pointing device 158 to provide signals to processor 152. Or a user can perform marking actions with screen position indicating device 160 on the surface of display 154 to provide signals to processor 152. In response, processor 152 presents and modifies image 162 on display 154, so that the user can continue to provide signals until image 162 shows a desired parallel length graph. Then the user can provide a signal requesting that processor 152 provide data defining image 162.

Processor 152 could execute a number of types of software to permit a user to produce an image in the manner described above. Processor 152 could execute document editing software or image editing software, for example.

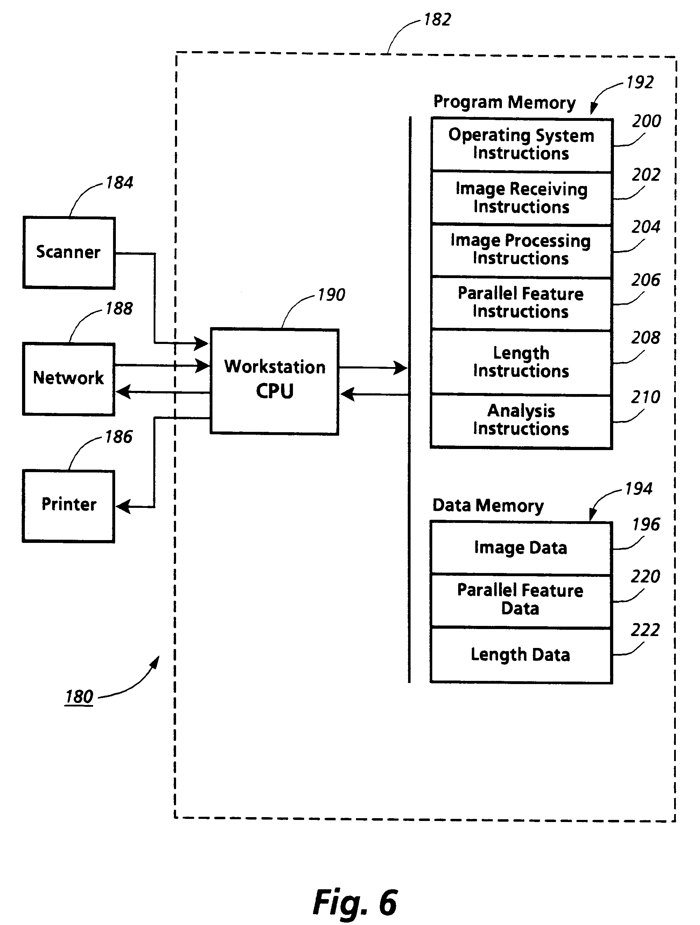

Fig. 6 shows a system in which the general features described above have been implemented.

System 180 in Fig. 6 includes workstation 182, a Sun SPARCStation 10 workstation. Scanner 184 can be a conventional scanner such as a Xerox Datacopy GS Plus scanner. Printer 186 can be a conventional printer such as a Xerox laser printer. Network 188 can be a conventional network operating in accordance with a standard protocol, such as the Ethernet protocol.

Workstation CPU 190 is connected to receive data from scanner 184 and network 188 and is connected to provide data to printer 186 and network 188. For example, CPU 190 can receive data defining an image showing a parallel length graph from scanner 154 as described above in relation to Fig. 4. Similarly, CPU 190 can receive data defining an image obtained in the manner described above in relation to Fig. 5 from network 188. In addition, workstation CPU 190 is connected to access program memory 192 and data memory 194 and other conventional workstation peripherals (not shown). Data memory 194 is illustratively storing image data 196 defining an image showing a parallel length graph.

Program memory 192 stores instructions CPU 190 can execute to perform operations implementing the general acts in Fig. 2. CPU 190 executes operating system instructions 200 that provide a Unix operating system or other appropriate operating system. Each of the other sets of instructions stored by program memory 192 can be obtained from source code in a conventional programming language such as Lisp, C, or the like with conventional compiler or interpreter techniques. When executed, these other instructions make calls to operating system instructions 200 in a conventional manner. In general, the instructions can be obtained from source code in a conventional programming language such as Lisp, C, or the like with conventional compiler or interpreter techniques that produce object code. A machine can store data indicating the source code or the resulting object code on a data storage medium in manufacturing a software product as described above in relation to Fig. 3, with the source code or object code being stored for access by a storage medium access device when the software product is used in a machine like system 180.

In executing image receiving instructions 202, CPU 190 receives data defining an image and stores it in data memory 194, as illustrated by image data 196. The data defining the image may be received from scanner 184 or network 188.

In executing image processing instructions 204, CPU 190 calls parallel feature instructions 206 and length instructions 208. Image processing instructions 204 also perform other operations relating to analysis of parallel length graphs.

In executing parallel feature instructions 206, CPU 190 calls analysis instructions 210 to perform basic geometric analysis of the image defined by image data 196, producing parallel feature data 220. Parallel feature data 220 indicate features in the image that satisfy a constraint on parallel features.

In executing length instructions 208, CPU 190 can call analysis instructions 210 to perform basic geometric analysis of an image defined by parallel feature data 220, producing length data 222. Length data 222 indicate a length for each feature indicated by parallel feature data 220.

In general, many of the acts described below are performed on items of data, each of which defines an image. Each item is referred to as a "data image." Some data images can be used in obtaining others. In general, all of the data images define images with the same number of pixels, and each operation produces an image with the same number of pixels. An operation on two images typically uses values of pairs of pixels to produce, for each pair, a pixel value in an image being produced; within each pair, one pixel is from each image and the two pixels in the pair are both at the same location as the pixel value in the image being produced. Many examples of such operations are described in the European patent applications, concurrently filed herewith, corresponding to US Serial Nos. 08/157,600 and 08/157,804.

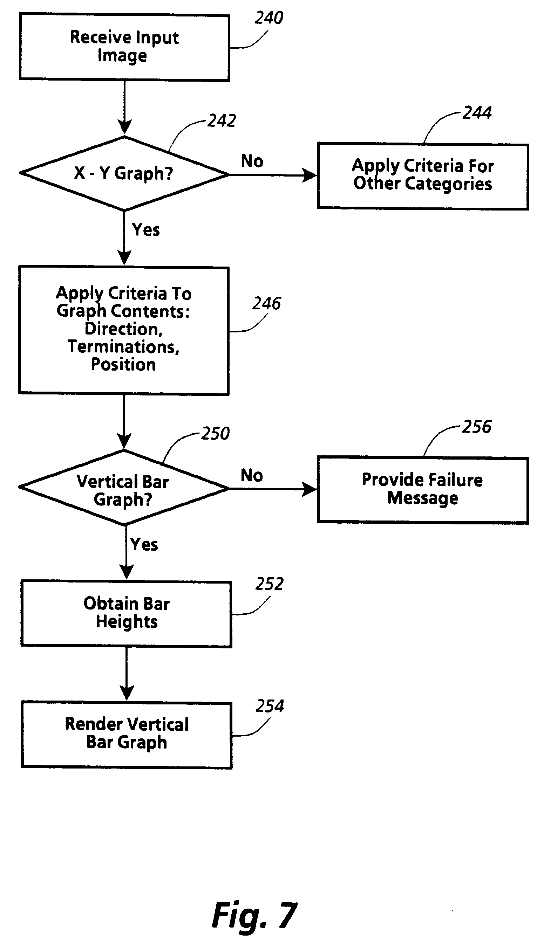

Fig. 7 shows acts in executing image processing instructions 204 in Fig. 6 in a first implementation.

The act in box 240 in Fig. 7 begins by receiving data defining an input image. The input image data may have been received previously by executing image receiving instructions 202, and may be provided with a call to image processing instructions 204.

The act in box 242 uses the input image data from box 240 to determine whether the input image shows a feature that meets an X-Y graph criterion. For example, the act in box 242 can determine whether the graphical representation includes a largest connected component that has a lowest elongated horizontal line and a leftmost elongated vertical line.

The act in box 242 can use the graphical representation's data image to obtain an *x* axis data image in which a pixel is ON if it is in the largest connected component, if it is in an elongated horizontal line, and if the line is the lowest elongated horizontal line in the largest connected component. The act in box 242 can similarly obtain a *y* axis data image in which a pixel is ON if it is in the largest connected component, if it is in an elongated vertical line, and if the line is the leftmost elongated vertical line in the largest connected component. The act in box 242 can then OR all the pixel values within each of the *x* axis and *y* axis data images and AND the result to obtain a binary value indicating whether the graphical representation meets the X-Y graph criterion.

The act in box 242 can obtain a largest component data image showing only the largest connected component in the input image. The X-Y graph criterion requires that the largest connected component must include the *x-y* axes. A data image showing the largest connected component can be obtained by spreading the maximum and minimum *x* and *y* coordinates within each connected component, taking the differences between each maximum and the respective minimum to obtain bounding box height and width at each pixel, multiplying height by width at each pixel to obtain bounding box area, obtaining the maximum bounding box area for the image, and making each pixel ON that has the maximum bounding box area.

The act in box 242 can use the largest component data image to obtain elongated horizontals and elongated verticals data images. First, the act in box 242 can obtain horizontals and verticals data images. Then the act in box 242 can apply an elongation criterion to the horizontals and verticals data image to obtain the elongated horizontals and elongated verticals data images.

The act in box 242 can obtain the horizontals data image, for example, by first obtaining a skeleton data image. The act in box 242 can then use the skeleton data image to obtain + *y* and - *y* edges data images.

The act in box 242 can then obtain first and second vertical adjacent data images. The first vertical adjacent data image can be obtained using the complement of the + *y* edges data image to obtain a vertical edges data image, meaning a data image obtained by ORing + *y* and - *y* edges data images for the complement of the + *y* edges data image. The vertical edges data image can be ANDed with the - *y* edges data image to obtain the first vertical adjacent data image. The second vertical adjacent data image can similarly be obtained, but using the complement of the - *y* edges data image to obtain a vertical edges data image and ANDing with the + *y* edges data image.

The act in box 242 can then OR the first and second vertical adjacent data images and perform two horizontal grow operations on resulting data image before ANDing it with the skeleton data image to obtain a preliminary thinned horizontals data image. Each horizontal grow operation extends each connected component one pixel in the + *x* and - *x* directions.

The act in box 242 can similarly obtain a preliminary thinned verticals data image using + *x* and - *x* edges data images, obtaining horizontal adjacent data images, performing vertical grow operations, and ANDing with the skeleton data image.

The act in box 242 can use the preliminary thinned horizontals and verticals data images to obtain first and second subsets data images, the first showing connected components of the preliminary thinned verticals data image that are completely within connected components in the preliminary thinned horizontals data image, and the second showing connected components of the preliminary thinned horizontals data image that are completely within connected components in the preliminary thinned verticals data image. In general, a subsets data image for a first and second data image can be obtained by first removing the first image from the second image, then performing a coloring operation to label each connected component in the second image that includes a remaining pixel, then removing the colored data image from the second image. The act in box 242 can then remove the first subsets data image from the preliminary thinned horizontals data image to obtain a thinned horizontals data image, and can remove the second subsets data image from the preliminary thinned verticals data image to obtain a thinned verticals data image.

Finally, the act in box 242 can use the thinned horizontals data image and the thinned verticals data image to obtain horizontals and verticals data images, respectively. For example, the act in box 242 can obtain two distances data images, a first one in which each pixel is labeled with the distance to the nearest connected component in the thinned horizontals data image and a second one in which each pixel is labeled with the distance to the nearest connected component in the skeleton data image. The distances data images are used to obtain an exclusive closer data image in which a pixel is ON if its distance in the first distances data image is smaller than its distance in the second distances data image. The act in box 242 then obtains the intersection of table boundary data image 272 and the exclusive closer data image to obtain the horizontals data image. This grows the skeleton out to the full width of the curve in those parts indicated by the thinned horizontals data image. The act in box 242 can similarly use the thinned verticals data image to obtain the verticals data image.

The act in box 242 can then apply the elongation criterion to the horizontals and verticals data images to obtain the elongated horizontals and elongated verticals data images. The elongation criterion can be applied to a data image by first obtaining an elongation data image in which each pixel in a connected component is labeled with a value between zero and 100 indicating elongation of the connected component. Then the elongation data image can be compared at each pixel with an elongation threshold, which can illustratively have a value of 70. Pixels with elongation values greater than the threshold are ON in the elongated horizontals and elongated verticals data images.

An elongation data image can be obtained by labeling each pixel with the values necessary to compute a measure of how elongated an object is in the conventional manner, using, for example, the technique described in Winston, P.H. and Horn, B.K.P., Lisp, Addison-Wesley, Reading, Mass., 1981, pp. 121-136 and 339-343. Then, the elongation can be computed for each pixel. Each pixel's value in the elongation data image can then be scaled to a value between 0 and 100.

The act in box 242 can obtain an *x* axis data image that shows only the connected component in the elongated horizontals data image that has the highest maximum *y* coordinate, indicating it is the lowest connected component. Similarly, the act in box 242 can obtain a *y* axis data image that shows only the connected component in the elongated horizontals data image that has the lowest minimum *x* coordinate, indicating it is the leftmost connected component. These operations can be performed using spread operations, to label each pixel in a connected component with the maximum *y* coordinate and minimum *x* coordinate of pixels in the connected component, then obtaining the highest maximum and lowest minimum and comparing each pixel's labels with them to obtain the *x* and *y* axis data images.

If both the *x* and *y* axis data images have at least one ON pixel, the input image meets the X-Y graph criterion.

If the act in box 242 determines that the input image does not meet the X-Y graph criterion, the act in box 244 applies criteria for categories other than parallel length graphs, as described in relation to Fig. 7 of the European patent applications, concurrently filed herewith, corresponding to US Serial No. 08/157,600.

If the image meets the X-Y graph criterion, the act in box 246 applies several criteria to the contents of the graph. Various criteria could be applied to determine whether the contents of the graph include parts that satisfy a constraint on parallel features. As shown in box 246, for example, a direction criterion, a terminations criterion, and a position criterion have been applied in this implementation.

The act in box 246 can obtain a graph contents data image by first ORing the *x* axis and *y* axis data images described above to obtain an axes data image. The act in box 246 can use the axes data image to obtain *x* and *y* project data images, one in the positive *x* direction and the other in the negative *y* direction. The project data images can be obtained by copying each non-zero pixel to other pixels in the direction of projection.

The act in box 246 can then AND the project data images to obtain a first quadrant data image in which each pixel above the *x* axis and right of the *y* axis is ON. The act in box 246 can AND the complement of the axes data image with the first quadrant data image and with the input image to obtain a graph contents data image showing the first quadrant of the parallel length graph.

The act in box 246 can apply a direction criterion in two parts. The first part of the direction criterion can require that the graph contents data image show features that are mostly approximately parallel to the *y* axis. The second part of the direction criterion can require a connected component that has the most frequent orientation of the graph contents data image. In applying both parts, the act in box 246 can obtain a region orientation data image from another data image.

To apply the first part of the direction criterion, the act in box 246 can first obtain orientation mode data indicating the most frequent orientation that occurs in a region orientation data image obtained from the graph contents data image.

The act in box 246 can then use the largest component data image described above to similarly obtain first and second mode data indicating the two orientations that are most frequent in the largest component data image. The act in box 246 can use the first and second mode data to choose the orientation that is closest to 90° counterclockwise from the *+ x* axis as the vertical mode. The act in box 246 can compare the vertical mode with the most frequent orientation indicated by the orientation mode data by subtracting to obtain the acute angle between the two orientations, then comparing the difference with an appropriate small angle, such as 15°, to determine whether the two are approximately the same.

If the two orientations are approximately the same, the graph contents meet the first part of the direction criterion.

The act in box 246 can apply the second part of the direction criterion by first obtaining a vertical bars data image. The act in box 246 can first use the graph contents data image to obtain an open curves data image. The act in box 246 can then use a region orientation data image for the open curves data image to obtain an orientation mode data image showing parts of connected components in the open curves data image that have orientations within an appropriate small angle, such as 15°, of the most frequent orientation. The act in box 246 can then perform a coloring operation to obtain a version of the open curves data image in which a pixel is ON if it is in a connected component that includes a pixel that is ON in the orientation mode data image. Each connected component in this version meets the second part of the direction criterion.

The act in box 246 can then apply the terminations criterion, which can require, for example, two terminations. The act in box 246 can use the version of the open curves data image that meets the second part of the direction criterion to obtain termination count data, and each pixel's value in the termination count data image can be compared with two to obtain a terminated vertical lines data image showing vertical lines with two terminations. The connected components in the terminated vertical lines data image meet the terminations criterion.

The act in box 246 can then apply the position criterion, which can require, for example, a length that is greater than distance from *x* axis. The act in box 246 can obtain an *x* axis distances data image in which each pixel's value is its distance to a near connected component in the *x* axis data image. The act in box 246 can then perform a spread operation to obtain a minimum *y* data image in which each pixel in a connected component in the terminated vertical lines data image is labeled with the minimum value in the *x* axis distances data image for pixels in the connected component.

The act in box 246 can also obtain an area data image in which each pixel in a connected component in the terminated vertical lines data image is labeled with the area of the connected component and a local width data image in which skeleton pixels are labeled with twice the distance to a near neighbor in the complement of the terminated vertical lines data image. The act in box 246 can obtain width mode data indicating the most frequent local width that occurs in connected components in the terminated vertical lines data image, and can divide each pixel's value in the area data image by the most frequent local width to obtain, after rounding, a length data image in which each pixel in a connected component in the terminated vertical lines data image is labeled with an approximate length of the connected component.

The act in box 246 can then compare each pixel's value in the length data image with its value in the minimum *y* data image to obtain the vertical bars data image. Each pixel is ON in the vertical bars data image if its length label is greater than its minimum *y* label, so that it is in a connected component that meets the position criterion.

The act in box 250 branches based on the result of applying the criteria in box 246. If the criteria are all met, the act in box 252 obtains bar heights and the act in box 254 renders a vertical bar graph with the bar heights from box 252. If not, the act in box 256 provides an appropriate failure message, which can indicate which criterion was not met.

The act in box 252 can use the *x* axis distances data image and the *y* axis data image to obtain minimum and maximum distances from the *x* axis of pixels in the *y* axis. The act in box 252 can subtract the minimum from the maximum to obtain a *y* axis length. The act in box 252 can also obtain a *y* axis distances data image similar to the *x* axis distances data image, but with each pixel labeled with a distance to the *y* axis.

For the pixels in each connected component in the vertical bars data image, the act in box 252 can then obtain the most frequent distance in the *y* axis distances data image and the maximum distance in the *x* axis distances data image. For each connected component, the act in box 252 can obtain height data indicating a ratio of the maximum distance in the *x* axis distances data to the *y* axis length. The act in box 252 can return the height data in a list, sorted by the most frequent distance in the *y* axis distances data image so that the heights are in order of increasing *x* coordinate.

The act in box 254 can then load the lengths indicated by the height data into a page description language (PDL) file, such as a PostScript file, which can then be provided to a printer.

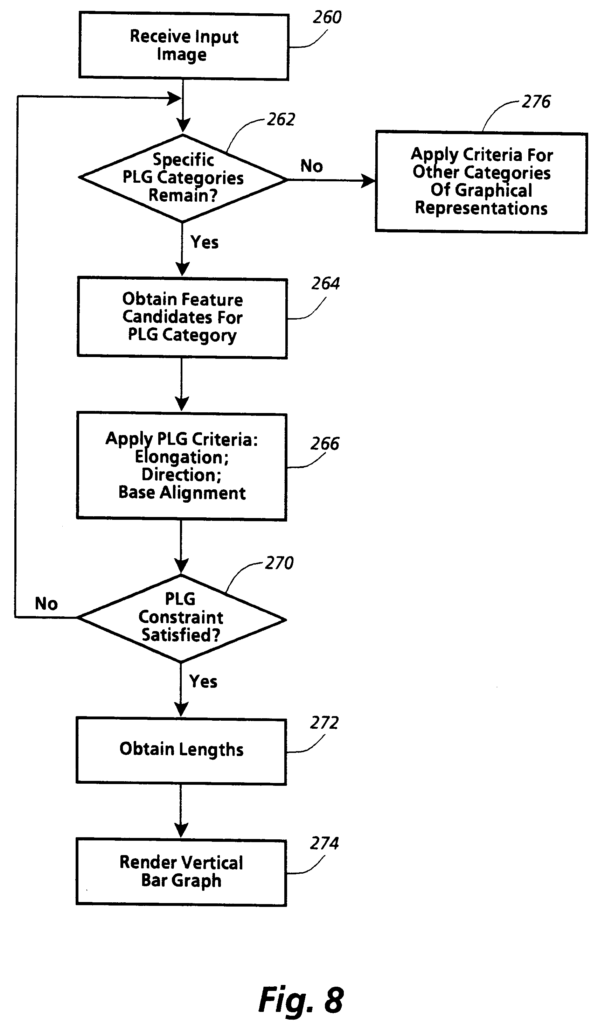

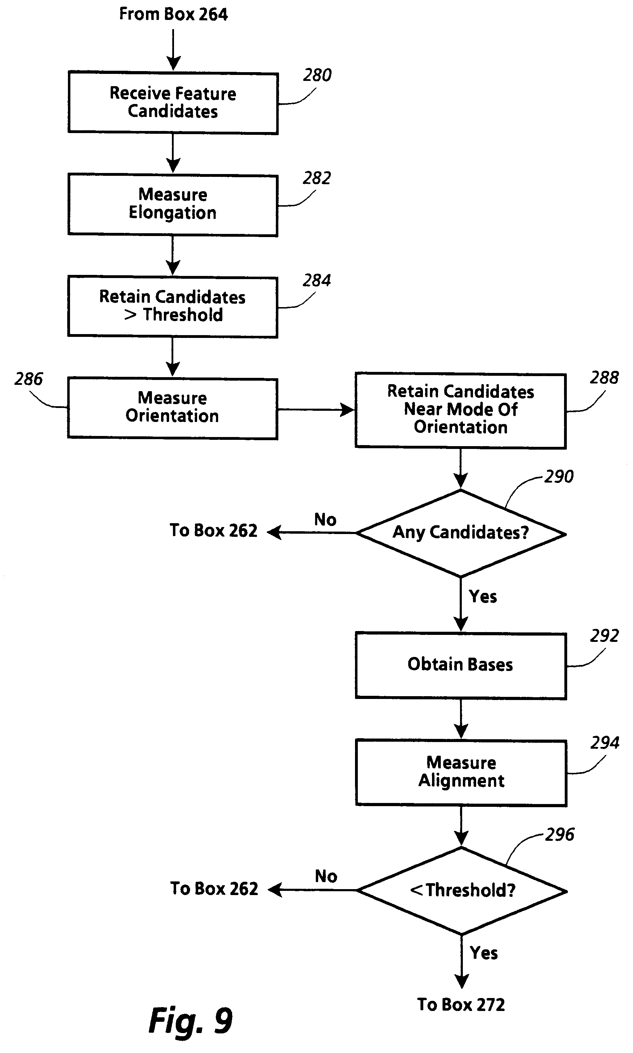

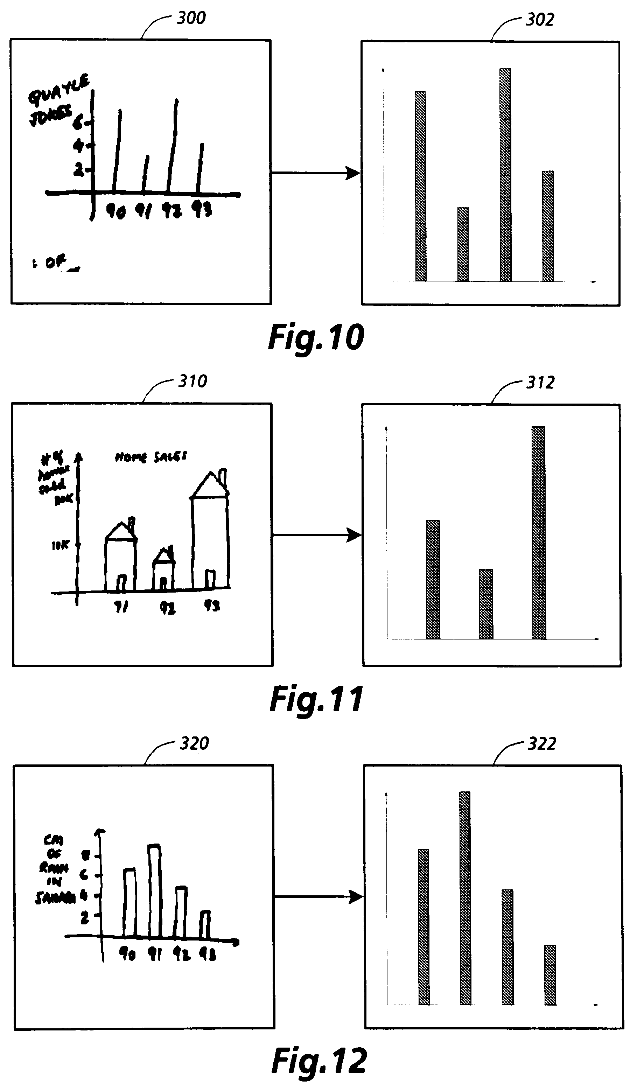

Fig. 8 shows acts in executing image processing instructions 204 in Fig. 6 in a second implementation. Fig. 9 shows acts in executing parallel feature instructions 206 in Fig. 6 in the second implementation. Figs. 10-18 illustrate nine specific categories of parallel line graphs for which the second implemention has been used to obtain a precisely formed vertical bar graph.

The act in box 260 in Fig. 8 begins by receiving data defining an input image. The input image data may have been received previously by executing image receiving instructions 202, and may be provided with a call to image processing instructions 204.

The act in box 262 begins an iterative loop that considers each of a number of specific categories of parallel length graphs (PLGs). The act in box 264 begins each iteration by obtaining a feature candidate data image for the next specific category. The feature candidate data image shows parts of the input image that meet a feature candidate criterion for the specific category. Techniques for obtaining feature candidate data images for several specific PLG categories are discussed below.

The act in box 266 then applies generic PLG criteria to the features in the feature candidate data image. The PLG criteria can include, for example, an elongation criterion, a direction criterion, and a base alignment criterion, all discussed in greater detail below in relation to Fig. 9. As described below, a bases data image can be obtained in applying the base alignment criterion.

The act in box 270 branches based on whether the input image satisfies a constraint on PLGs that includes the feature candidate criterion in box 264 and the elongation criterion, direction criterion, and base alignment criterion in box 266. If so, the act in box 272 obtains lengths for the features that satisfy the constraint, and the act in box 274 renders a vertical bar graph representing the lengths. But if not, the act in box 262 begins an iteration for the next specific category of PLG. When all PLG categories have been tried, the act in box 276 determines whether the input image satisfies a constraint for another category of graphical representation, such as proportioned parts graphs.

In obtaining heights, the act in box 272 can first obtain a distances data image in which each pixel is labeled with a distance to the nearest connected component in the bases data image. Then the act in box 272 can perform a spread operation, to obtain a lengths data image in which each pixel in each feature that satisfies the PLG constraint is labeled with the maximum distance from the distances data image for any of the pixels in the feature. The maximum distance for the pixels of each feature is the height of the feature relative to the bases, which is treated as the length of the feature, so that the label of each pixel in a feature is the length of the feature.

The act in box 272 can then use the lengths data image to obtain length data indicating normalized lengths of the features in order. The act in box 272 can obtain the maximum of all the lengths indicated in the lengths data image. A values data image can be obtained in which each pixel in a feature is labeled with a unique identifier for the feature, with the unique identifiers assigned in the same order as the positions of the features. Then, the act in box 272 can obtain a list of pairs in which each pair includes one of the unique identifiers and the length of the parallel feature with the unique identifier. Then, the act in box 272 can obtain a list of normalized lengths in which each length is divided by the maximum length and in which the normalized lengths are sorted according to the unique identifiers of the parallel features.

Fig. 9 shows how the acts in boxes 266 and 270 in Fig. 8 can be implemented. The act in box 280 in Fig. 9 begins by receiving a data image showing parts of an input image that meet a feature candidate criterion, such as a data image from the act in box 264 in Fig. 8.

The act in box 282 measures elongation for each feature candidate in the data image from box 280, as described above in relation to Fig. 7, and labels each pixel in each feature candidate with the candidate's elongation. The act in box 284 then compares each pixel's label with an elongation threshold, such as 70, leaving each pixel ON only if its label exceeds the threshold. The act in box 284 therefore produces a data image in which only elongated feature candidates are retained.

The act in box 286 measures orientation for each feature candidate retained in the data image from box 284, and labels each pixel in each retained feature candidate with the candidate's orientation. The act in box 288 then leaves each pixel ON only if its label is approximately the same as the mode of orientation. The act in box 308 therefore produces a data image in which only parallel elongated feature candidates are retained.

The act in box 286 can measure orientation by using the data image from box 284 to obtain an ALI data image and can obtain the mode of orientation as described above in relation to Fig. 7. The act in box 288 can then determine, for each pixel, whether its label is different from the mode of orientation by less than a small constant angle, such as π/12, and retain only the pixels with differences less than the small constant angle.

The act in box 290 branches based on whether an OR operation finds any pixels are ON in the data image with parallel elongated feature candidates from box 288. If not, the next specific category can be handled by an iteration beginning with box 262 in Fig. 8.

If the image from box 288 includes at least one candidate, the act in box 292 obtains a bases data image showing the point on each candidate with the lowest coordinate in the direction in which the candidates extend. The act in box 292 can be implemented by first obtaining orientation data indicating whether the candidates extend horizontally or vertically. Then, an appropriate operation can be performed to obtain the bases data image.

The orientation data can be obtained through a series of operations on data images.

An area data image can be obtained, with each pixel in each candidate being labeled with the area of the candidate. Then two spread operations can be performed to obtain coordinate sum data images in which each pixel in a candidate is labeled with the sum of the *x* coordinates and with the sum of the *y* coordinates of pixels in the candidate. Then two center of area (COA) data images can be obtained by dividing each pixel's coordinate sum from each of the coordinate sum data images by the pixel's value in the area data image, so that each pixel in a parallel feature is labeled in the COA data images with the *x* and *y* coordinates of the center of area of the parallel feature.

The COA data images can then be used to obtain an angle of least inertia (ALI) data image in the conventional manner, using, for example, the technique for obtaining orientation using center of area described in Winston, P.H. and Horn, B.K.P., Lisp, Addison-Wesley, Reading, Mass., 1981, pp. 121-136 and 339-343.

The ALI data image can be used to obtain the most frequent value, or mode, of ALI in candidates in the data image from box 288. If the result is between 45° and 135°, the orientation is classified as vertical; otherwise, the orientation is classified as horizontal.

If the orientation is horizontal, the bases data image shows the point in each candidate with the smallest *x* coordinate in the candidate. If vertical, the bases data image shows the point in each candidate with the greatest *y* coordinate.

The act in box 294 uses the bases data image from box 292 to obtain a measure of alignment of the base points.

The act in box 294 can be implemented by obtaining an elongation data image as described above in relation to Fig. 7. Each pixel's value in the elongation data image is a measure of alignment.

The act in box 296 can apply an alignment criterion to the base points in the bases data image by comparing the measure of alignment from box 294 with an alignment threshold, such as 0.3. If the base points do not meet the alignment criterion, the next specific PLG category is handled beginning in box 262. If the base points meet the alignment criterion, the act in box 272 obtains lengths as described above in relation to Fig. 8.

The lengths from box 272 in Fig. 8 can be used for various purposes. For example, they can be used to obtain a precisely formed parallel line graph. Figs. 10-18 illustrate nine specific PLG categories, showing in each case how lengths obtained from a sketch have been used to obtain a precisely formed vertical bar chart. In each case, the lengths can be loaded into a page description language (PDL) file, such as a PostScript file, which can then be provided to a printer, as described above in relation to Fig. 7.

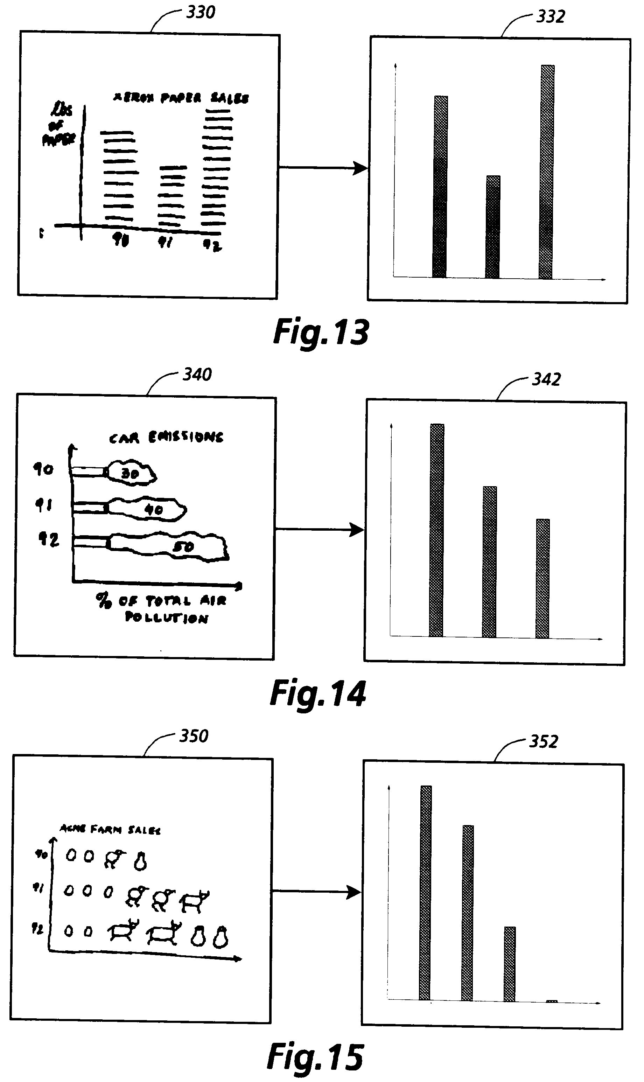

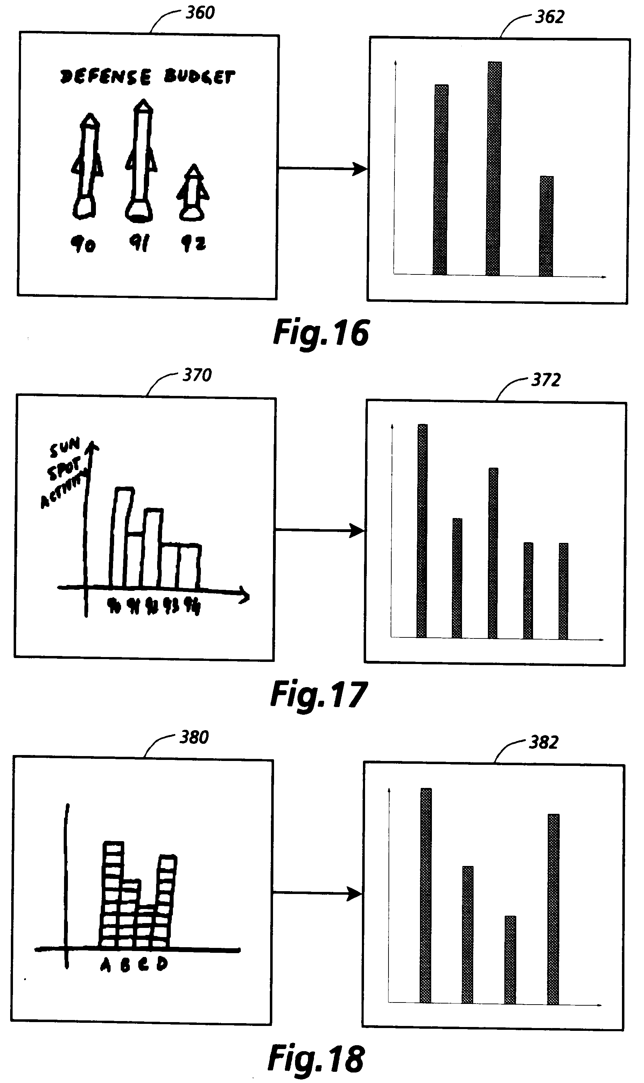

Fig. 10 illustrates a sketch of a vertical bar graph in which each bar is a line connected to the *x* axis. Fig. 11 illustrates a sketch of a vertical bar graph in which each bar is a sketch of a house. Fig. 12 illustrates a sketch of a vertical bar graph in which each bar is a separate rectangular outline around a white area. Fig. 13 illustrates a sketch of a vertical bar graph in which each bar is a stack of short horizontal lines. Fig. 14 illustrates a sketch of a horizontal bar graph in which each bar is a sketch of an exhaust pipe with a plume of smoke. Fig. 15 illustrates a sketch of a horizontal bar graph in which each bar is a series of sketches of agricultural products. Fig. 16 illustrates a sketch of a vertical bar graph in which each bar is a sketch of a missile. Fig. 17 illustrates a sketch of a vertical bar graph in which each bar is a rectangular outline around a white area, and the bars are adjacent. Fig. 18 illustrates a sketch of a vertical bar graph in which each bar is a rectangular outline, the bars are adjacent, and each bar is subdivided by horizontal lines.

In Fig. 10, input image 300 shows a sketch that is an instance of a first specific PLG category. The sketch includes *x-y* coordinate axes, with hash marks along the *y* axis to show quantities and with four approximately parallel lines extending upward from the *x* axis, each line having a respective length. The y axis has a label, "QUAYLE JOKES," and each of the hash marks and parallel lines has a label.

To obtain a feature candidate data image showing parts of input image 300 that meet a feature candidate criterion, the act in box 264 can obtain a graph contents data image, as described above. The graph contents data image shows that part of input image 300 that is in the first quadrant, which is illustratively four approximately vertical lines. The act in box 264 then obtains a COA data image in the *x* direction similar to the COA data image described above in relation to box 292 in Fig. 9. Each pixel in the COA data image is labeled with the *x* coordinate of the center of area of the connected component.

The COA data image is the feature candidates data image for the first category.

When lengths are obtained from the COA data image as described above in relation to box 272 in Fig. 8, the lengths can be used to produce output image 302. As shown, output image 302 is a precisely formed vertical bar graph with four bars that have relative lengths similar to the four vertical lines in the COA data image.

In Fig. 11, input image 310 shows a sketch that is an instance of a second specific PLG category. As in Fig. 10, the sketch includes *x-y* coordinate axes, with hash marks along the *y* axis to show quantities. The *y* axis has a label, "# of homes sold," each of the hash marks has a label, and there are three labels along the *x* axis as well as a title. But rather than four approximately parallel lines as in Fig. 10, the sketch in input image 310 includes three house-shaped features on the *x* axis with different heights.

In general, in the second category, each bar is a closed outer boundary divided into regions by internal boundaries. Therefore, the act in box 264 in Fig. 8 is performed differently for the second category.

The act in box 264 can use input image 310 to obtain a largest component data image as described above. Then the act in box 264 can use the largest component data image to obtain a holes data image showing enclosed areas of the largest component data image.

The act in box 264 can use the holes data image to obtain a clusters data image in which pixels in connected components that are grouped together have the same unique identifier. The act in box 264 can obtain the clusters data image using two-dimensional grouping techniques as described in the concurrently filed European patent application corresponding to US Serial No. 08/158,053. For input image 310, the clusters data image should have three unique identifiers of groups of connected components, each of which labels the pixels in the holes in a respective house.

The act in box 264 can gate the clusters data image with the holes data image to produce a gated data image in which only the pixels that are in connected components in the holes data image are labeled with unique identifiers.

The gated data image is the feature candidates data image for the second category.

When lengths are obtained from the gated data image as described above in relation to box 272 in Fig. 8, the lengths can be used to produce output image 312. As shown, output image 312 is a precisely formed vertical bar graph with three bars that have relative lengths similar to the heights of the three houses in input image 310.

In Fig. 12, input image 320 shows a sketch that is an instance of a third specific PLG category. As in Fig. 11, the sketch includes *x*-*y* coordinate axes, with hash marks along the *y* axis to show quantities. The *y* axis has a label, "CM OF RAIN IN SAHARA," each of the hash marks has a label, and there are four labels along the *x* axis. But rather than three house-shaped features as in Fig. 11, the sketch in input image 320 includes four bar-shaped features on the *x* axis with different heights. Therefore, the act in box 264 in Fig. 8 is performed differently for the third category.

The act in box 264 can use input image 320 to obtain a first quadrant data image as described above in relation to the first category. The act in box 264 can also use input image 320 to obtain a holes data image as described above in relation to the second category. Then the act in box 264 can AND the first quadrant data image and the holes data image, and use the resulting data image to obtain a COA data image in the *x* direction as described above.

The COA data image can be the feature candidates data image for the third category. Grouping is not necessary because each bar-shaped feature in input image 320 has only one hole.

When lengths are obtained from the COA data image as described above in relation to box 272 in Fig. 8, the lengths can be used to produce output image 322. As shown, output image 322 is a precisely formed vertical bar graph with four bars that have relative lengths similar to the lengths of the bar-shaped features in input image 320.

In Fig. 13, input image 330 shows a sketch that is an instance of a fourth specific PLG category. As in Fig. 12, the sketch includes *x-y* coordinate axes. The *y* axis has a label, "lbs of PAPER" and there are three labels along the *x* axis as well as a title. But rather than four bar-shaped features as in Fig. 12, the sketch in input image 330 includes three stacks of unconnected short parallel lines suggesting sheets of paper, each stack having a different height. Therefore, the act in box 264 in Fig. 8 is performed differently for the fourth category.

The act in box 264 can use input image 240 to obtain an ALI data image as described above. Then the act in box 264 can perform a one-dimensional grouping operation on the ALI values in the ALI data image as described in the Grouping Application to obtain an ALI groups data image in which pixels in connected components are labeled with a unique identifier of a group of connected components that have approximately the same ALI values. The act in box 264 can select the pixels in the ALI groups data image that have the most frequently occurring group identifier, to obtain a selected group data image. The act in box 264 can then use the selected group data image to obtain a vertical groups data image, using a technique like that used to obtain the ALI groups data image as described above, but grouping over the *x* coordinate of each pixel. Each pixel with an *x* coordinate in each group can be labeled with a unique identifier for the group.

The vertical groups data image is the feature candidates data image for the fourth category.

For the fourth category, it is possible to obtain the feature candidates data image without obtaining a graph contents data image, primarily because the features that form the bars share an intrinsic property, i.e. ALI, that distinguishes them from all other elements in the image. If this were not true, or if there were doubt, it would be appropriate to obtain a graph contents data image before performing the operations described above.

When lengths are obtained from the vertical groups data image as described above in relation to box 272 in Fig. 8, the lengths can be used to produce output image 332. As shown, output image 332 is a precisely formed vertical bar graph with three bars that have relative lengths similar to the heights of the stacks in input image 330.

In Fig. 14, input image 340 shows a sketch that is an instance of a fifth specific PLG category. As in Fig. 13, the sketch includes *x-y* coordinate axes. The *x* axis has a label, "% OF TOTAL AIR POLLUTION," and there are three labels along the *y* axis as well as a title. But rather than three stacks of short horizontal lines as in Fig. 12, the sketch in input image 340 includes three horizontally extending features, each shaped like an exhaust pipe with a cloud of smoke of a different length in the *x* direction. Therefore, the act in box 264 in Fig. 8 is performed differently for the fifth category.

The act in box 264 could use input image 340 to obtain a largest component data image as described above. Then the act in box 264 can use the largest component data image to obtain a partial holes data image using a two-dimensional grouping technique as described in the Grouping Application.

For input image 340, the partial holes data image should have six unique identifiers, one for each of the partial holes, which include the three exhaust pipes and the three smoke clouds. Each of the unique identifiers is used to label the pixels in a respective one of the partial holes. The term "partial holes" is used because the operation that turns ON pixels can close up gaps in connected components enclosing a white area to create holes that are not completely enclosed in an input image. In general, it is appropriate to obtain a partial holes data image rather than a holes data image whenever holes are used to obtain parallel features and there might be incomplete enclosure of the holes.

Then the act in box 264 can use the partial holes data image to obtain a horizontal groups data image, using a one-dimensional grouping technique as described in the Grouping Application over the *y* coordinate of each pixel in each partial hole. Each pixel with a *y* coordinate in each group can be labeled with a unique identifier for the group.

The horizontal groups data image is one possible feature candidates data image for the fifth category.

Instead of the above technique, the act in box 264 could obtain a graph contents data image as described above, and then use the graph contents data image to obtain a COA data image in theydirection, similar to the COA data image described above.

The COA data image in the y direction is another possible feature candidates data image for the fifth category.

When lengths are obtained from the horizontal groups data image or from the COA data image as described above in relation to box 272 in Fig. 8, the lengths can be used to produce output image 342. As shown, output image 342 is a precisely formed vertical bar graph with three bars that have relative lengths similar to the horizontally extending features in input image 340.

In Fig. 15, input image 350 shows a sketch that is an instance of a sixth specific PLG category. As in Fig. 14, the sketch includes *x-y* coordinate axes. There are three labels along the *y* axis as well as a title. But rather than three horizontally extending features, each shaped like an exhaust pipe with a cloud of smoke as in Fig. 14, the sketch in input image 350 includes three horizontally extending features that include separate connected components in a row, with each connected component shaped like a farm product. Each horizontally extending feature includes a row of a different length in the *x* direction. Therefore, the act in box 264 in Fig. 8 is performed differently.

The act in box 264 can use input image 350 to obtain a graph contents data image as described above. Then the act in box 264 can use the graph contents data image to obtain a holes data image as described above. Then the act in box 264 can use the holes data image to obtain a horizontal groups data image.

The horizontal groups data image can be the feature candidates data image for the sixth category.

When lengths are obtained from the horizontal groups data image as described above in relation to box 272 in Fig. 8, the lengths can be used to produce output image 352. As shown, output image 352 is a precisely formed vertical bar graph with three bars that have relative lengths similar to the horizontally extending features in input image 360. In addition, output image 352 includes a very short fourth bar at the right, apparently resulting from holes in the letters in the title. This short bar could be eliminated by applying an appropriate criterion.

In Fig. 16, input image 360 shows a sketch that is an instance of a seventh specific PLG category. The sketch shows three vertically extending features, each shaped like a missile. The sketch also shows a label below each missile and, above, a title. Each missile has a height different than the others. Unlike Figs. 10-15, the sketch does not include *x*-*y* coordinate axes. Therefore, the act in box 264 in Fig. 8 is performed differently for the seventh category.

The act in box 264 can use input image 360 to obtain a horizontal groups data image as described above in relation to the fifth category. The act in box 264 could then select the second horizontal group from the top of input image 360 and label each connected component in it with its COA in the *x* direction to obtain a COA data image. The act in box 264 could then gate the COA data image with the second horizontal group from the top to obtain a gated COA data image.

The gated COA data image can be the feature candidates data image for the seventh category.

When lengths are obtained from the gated COA data image as described above in relation to box 272 in Fig. 8, the lengths can be used to produce output image 362. As shown, output image 362 is a precisely formed vertical bar graph with three bars that have relative lengths similar to the vertically extending features in input image 360.

In Fig. 17, input image 370 shows a sketch that is an instance of an eighth specific PLG category. Like Fig. 15, the sketch includes *x*-*y* coordinate axes. There are five labels along the *x* axis and the *y* axis is labeled "SUN SPOT ACTIVITY." The sketch in input image 370 includes five contiguous vertically extending bars, each having a respective height in the *y* direction.

The act in box 264 can use input image 370 to obtain a COA data image in the *x* direction.

When lengths are obtained from the COA data image as described above in relation to box 272 in Fig. 8, the lengths can be used to produce output image 372. As shown, output image 372 is a precisely formed vertical bar graph with five bars that have relative lengths similar to the bars in input image 370.

In Fig. 18, input image 380 shows a sketch that is an instance of a ninth specific PLG category. Like Fig. 17, the sketch includes *x-y* coordinate axes. There are four labels along the *x* axis. The sketch in input image 380 includes four contiguous vertically extending features, each having a respective height in the *y* direction. The vertically extending features are divided by a number of horizontal lines into small rectangular parts. Therefore, the act in box 264 in Fig. 8 is performed differently for the ninth category.

The act in box 264 can use input image 380 to obtain a largest component data image as described above. The act in box 264 can use the largest component data image to obtain a holes data image as described above. Then the act in box 264 can use the holes data image to obtain a vertical groups data image as described above in relation to the fourth category.

The vertical groups data image can be the feature candidates data image for the ninth category.

When lengths are obtained from the vertical groups data image as described above in relation to box 264 in Fig. 8, the lengths can be used to produce output image 382. As shown, output image 382 is a precisely formed vertical bar graph with four bars that have relative lengths similar to the bars in input image 380.

System 390 in Fig. 21 includes network 392, workstation 394, storage server 396, and image processing server 398. A user can operate workstation 394 to provide requests on network 392 for storage of data defining images, such as from a scanner or other source. In response, storage server 396 can store the data. Then, the user can operate workstation 394 to provide requests for image processing operations like those described above. In response, image processing server 398 can perform the requested operations, executing instructions like those described above in relation to Fig. 6.

Fig. 22 shows how the techniques described above could be applied in a personal computer that can operate as a fax server. Fig. 23 illustrates how the techniques described above could be applied in a copier.

System 400 in Fig. 22 includes CPU 402, which can be the CPU of a personal computer such as an IBM PC compatible machine. CPU 402 is connected to receive user input signals from keyboard 404 and mouse 406, and can present images to a user through display 408. CPU 402 is also connected to a number of other peripheral devices, illustratively including disk drive 410, modem 412, scanner 414, and printer 416.

Program memory 420 stores operating system (OS) instructions 422, which can be a version of DOS; user interface instructions 424; fax server instructions 426; and image processing instructions 428. Fax server instructions 426 can be similar to the PaperWorks™ software product from Xerox Corporation. Image processing instructions 428 can be implemented as described above in relation to image processing instructions 204 in Fig. 6 and in relation to Figs. 7-18. Fax server instructions 426 and image processing instructions 428 could be obtained in the form of a software product stored on a floppy disk, diskette, or CD-ROM, and accessed for storage in program memory 420 by disk drive 410.

Data memory 440 stores input image data 442, parallel feature data 444, and length data 446 as described above in relation to Figs. 6-9 and, in more detail, in relation to Figs. 10-18. Data memory 440 can also store output image data 448 if image processing instructions 428 obtain data defining an output image as described above in relation to Figs. 10-18.

System 400 can obtain input image data 442 defining an image that shows a parallel length graph in many ways: Data defining an image showing a parallel length graph could be produced interactively as described above in relation to Fig. 5, such as by executing user interface instructions 424. Any appropriate user interface techniques could be used, including pen-based techniques. Data defining a previously produced image showing a parallel length graph could be retrieved from a storage medium by disk drive 410. Data defining an image showing a parallel length graph could be obtained from scanner 414 as described above in relation to Fig. 4. A user could produce data defining an image showing a parallel length graph elsewhere and provide it to system 400 through modem 412, such as by making a facsimile transmission to modem 412.

CPU 402 could execute fax server instructions 426 in response to a request received by facsimile transmission through modem 412. The request could include a form indicating an image processing operation and also indicating an output image destination such as a fax machine or printer 416. The request could also include data defining an image showing a parallel length graph or could indicate an image previously obtained by system 400.

Fax server instructions 426 could include calls to image processing instructions 428 to perform acts like those shown in Figs. 7-9 if the request indicates an image processing operation. Execution of fax server instructions 426 could further provide data defining a rendered image produced in box 254 in Fig. 7 or in box 274 in Fig. 8. The data defining the rendered image could be provided to modem 412 for facsimile transmission or to printer 416 for printing.

In Fig. 23, copier 460 can be a digital copier or other electronic reprographics system. Scanning circuitry 462 obtains data defining input image 464 showing a parallel length graph. User interface circuitry 470 includes touch sensing device 472, which can be a push button, a heat or pressure sensitive element, a capacitance sensing element, or other device for sensing a touching action. When a user touches device 472, user interface circuitry 470 provides touch data indicating that device 472 has been touched.

Processing circuitry 480 uses the touch data to obtain request data indicating a request for an analysis operation. Then, responding to the request, processing circuitry 480 uses data defining input image 464 to automatically obtain parallel feature data indicating features of input image 464 that meet a parallel feature criterion and uses the parallel feature data to obtain length data indicating the lengths of the features. Processing circuitry 480 then uses the length data to obtain data defining an output image that shows a parallel length graph with parallel extending features having the indicated lengths. This data is provided to printing circuitry 490 for printing of output image 492.

The invention could also be applied in combination with other techniques, including those described in concurrently filed European patent applications corresponding to US Serial Nos. 08/158, 132; 08/157,856 and 08/158,063.

## Claims

1. A method including:
obtaining input image data defining an input image (10) that shows a parallel length graph;
using the input image data to obtain parallel feature data (20) indicating features in the input image (10) that satisfy a constraint on parallel features (12,14); and
using the parallel feature data (20) to obtain length data (30) indicating, for each of the features (12,14), a length.

2. A method as claimed in claim 1, in which the constraint on parallel features includes a direction criterion, the act of using the input image data to obtain parallel feature data including:
obtaining direction data indicating a prominent direction within the parallel length graph; and
using the direction data to obtain the parallel feature data, the parallel feature data indicating features that meet the direction criterion; the direction criterion requiring features that extend approximately parallel to the prominent direction.

3. A method as claimed in claim 2, in which the act of obtaining direction data comprises:
obtaining orientation mode data indicating a mode of orientation within the parallel length graph, the mode of orientation being the prominent direction.

4. A method as claimed in claim 2 or claim 3, in which the constraint on parallel features further includes a terminations criterion, the act of using the input image data to obtain parallel feature data further comprising:
obtaining terminations data indicating a number of terminations for each feature that meets the direction criterion; and
using the terminations data to obtain the parallel feature data, the parallel feature data indicating features in the input image that meet the termination criterion; the termination criterion requiring features that have two terminations and, optionally, the constraint on parallel features further includes a position criterion, the act of using the input image data to obtain parallel feature data further comprising:
obtaining position data indicating, for each feature that meets the direction criterion and the terminations criterion, a distance from an axis and an approximate length; and
using the position data to obtain the parallel feature data, the parallel feature data indicating features in the input image that meet the position criterion; the position criterion requiring features that have approximate length greater than distance from the axis.

5. A method as claimed in claim 1, in which the constraint on parallel features includes, for each of a number of specific categories of parallel length graphs, a feature candidate criterion; the act of using the input image data to obtain parallel feature data comprising:
obtaining feature candidate data indicating parts of the input image that meet the feature candidate criterion for one of the specific categories of parallel length graphs; and
using the feature candidate data to obtain the parallel feature data and, optionally, the constraint on parallel features further includes an elongation criterion; the act of using the feature candidate data to obtain the parallel feature data comprising:
using the feature candidate data to obtain elongation candidate data indicating elongation for features that include parts of the input image indicated by the feature candidate data; and
using the elongation data to obtain the parallel feature data; the parallel feature data indicating features that meet an elongation criterion; the elongation requiring a feature to be elongated in the direction of its angle of least inertia and, optionally, the constraint on parallel features further includes a direction criterion; the act of using the feature candidate data to obtain the parallel feature data further comprising:
obtaining direction data indicating a prominent direction within the parallel length graph; and
using the direction data to obtain the parallel feature data, the parallel feature data indicating features that meet the direction criterion; the direction criterion requiring features that extend approximately parallel to the prominent direction.

6. A method as claimed in claim 5, in which the act of obtaining direction data comprises:
obtaining orientation mode data indicating a mode of angle of least inertia within the parallel length graph, the mode of angle of least inertia being the prominent direction.

7. A method as claimed in claim 5, in which the constraint on parallel features further includes a base alignment criterion; the act of using the feature candidate data to obtain the parallel feature data further comprising:
obtaining bases data indicating, for each feature, a base; and
using the bases data to obtain the parallel feature data, the parallel feature data indicating features that meet the base alignment criterion; the base alignment criterion requiring features with bases that are aligned.

8. A method of operating a machine that includes:
image input circuitry (70) for obtaining data defining images as input; and
a processor (66) connected for receiving data defining images from the image input circuitry (70);
the method including:
operating the processor (66) to receive input image data from the image input circuitry, the input image data defining an input image that shows a parallel length graph;
operating the processor (66) to use the input image data to obtain parallel feature data indicating features in the input image that satisfy a constraint on parallel features; and
operating the processor (66) to use the parallel feature data to obtain length data indicating, for each of the features, a length.

9. A machine comprising:
image input circuitry (70) for obtaining data defining images as input;
memory for storing data; and
a processor (66) connected for receiving data defining images from the image input circuitry (70) and connected for accessing data stored in the memory;
the data stored in the memory comprising instruction data indicating image processing instructions the processor can execute; the processor (66), in executing the image processing instructions:
receiving input image data from the image input circuitry, the input image data defining an input image that shows a parallel length graph;
using the input image data to obtain parallel feature data indicating features in the input image that satisfy a constraint on parallel features; and
using the parallel feature data to obtain length data indicating, for each of the features, a length.

10. An article of manufacture for use in a machine that includes:
image input circuitry (70) for obtaining data defining images as input;
a storage medium access device (64) for accessing a medium that stores data; and
a processor (66) connected for receiving data defining images from the image input circuitry; the processor (66) further being connected for receiving data from the storage medium access device;
the article including:
a storage medium (62) that can be accessed by the storage medium access device (64) when the article is used in the system; and
data stored by the storage medium so that the storage medium access device can provide the stored data to the processor when the article is used in the system; the stored data comprising instruction data indicating instructions the processor can execute; the processor, in executing the instructions:
receiving input image data from the image input circuitry, the input image data defining an input image that shows a parallel length graph;
using the input image data to obtain parallel feature data indicating features in the input image that satisfy a constraint on parallel features; and
using the parallel feature data to obtain length data indicating, for each of the features, a length.
